Europäisches Patentamt

European Patent Office

Office européen des brevets

(11) Publication number: **0 276 827**
**A2**

## (12) EUROPEAN PATENT APPLICATION

(21) Application number: 88101161.3

(22) Date of filing: 27.01.88

(51) Int. Cl.4: **G01N 27/90**

(30) Priority: 30.01.87 SE 8700359

(43) Date of publication of application:
**03.08.88 Bulletin 88/31**

(84) Designated Contracting States:
**BE DE FR GB IT**

(71) Applicant: **TÖRNBLOMS KVALITETSKONTROLL AB**

**S-725 90 Västeras(SE)**

(72) Inventor: **Törnblom, Bengt Hjalmar**
**Vikhus Rytterne**
**S-725 90 Västeras(SE)**

(74) Representative: **Boecker, Joachim, Dr.-Ing.**
**Rathenauplatz 2-8**
**D-6000 Frankfurt a.M. 1(DE)**

(54) **Device for control and/or measurement of a test object.**

(57) Device for control and/or measurement of a test object which device supplements a conventional crack detecting equipment. The device detects the presence of, for example, disturbing magnetic material, such as cold oxide scales (2) in or on a test object (1), in order to ensure that disturbances originating from magnetic material are not confused with surface crack without being discovered. By utilizing eddy current technique, oxide scales which are harmless to the process can be separated from dangerous surface crack, thus avoiding the scrapping of test objects which have actually no cracks. The invention is based on signal-processing of at least two signals originating from a transducer (3,4), by means of a vector transformation method, and separating, for example, oxide scales from cracks as a function of a comparison of signals, from at least two transformation blocks. This comparison can be supplemented with conditions, for example digital condition functional blocks.

FIG. 4

## Device for control and/or measurement of a test object

The invention relates to a device for control and/or measurement of a test object according to the precharacterising part of Claim 1.

The present invention is to be considered an addition to SE-A-8603604-3 (EP-A-87112238.8). Furthermore, the invention is related to the field of control and/or supervision, for example the detection of cracks using eddy current technique on hot continuously cast steel ingots and the like.

In conventional vector transformation, the aim is to combine and sum up different analog signals, after the signals have been weighted and provided with polarity constants etc., such that desired signals are emphasized whereas undesired signals are suppressed in the resultant analog output signal from the transformation block. However, in those cases where it is desired to suppress, for example, signals caused by oxide scales ,the suppression does not function other than for a limited number of types of oxide scales. The reason for this is that the oxide scales may vary greatly in size, shape, orientation, and so on. In other words, the transformation is only effective for those oxide scales which corre spond to the current transformation setting. This is an obvious drawback which is difficult to overcome in conventional vector transformation technique.

The invention aims at developing a device for control and/or measurement of a test object of the above-mentioned kind which is able to avoid the confusion between true crack-originating signals and disturbing signals caused by harmless appearances, such as magnetic oxide scales on the surface of a test object.

To achieve this aim the invention suggests a device for control and/or measurement of a test object according to the introductory part of Claim 1, which is characterized by the features of the characterizing part of Claim 1.

Further developments of the invention are characterized by the features of the additional claims.

The present invention shows how, in a relatively simple manner, simple conventional transformation blocks (SPR, GSK) can be supplemented with a comparison block (JMF), which by means of special signal processing is able to determine whether it is a question of a crack signal or an oxide scale signal. It should then be noted that the unwanted, in this case oxide scale signals, need not be greatly suppressed but that the comparison is determining for the classification of the type if signal. Since the principle is general by nature, it can also be employed for suppression or separation of other variables than oxide scales, if desired. However, the oxide scales are favourable since they are indefinite in size and shape and thus - at the same time - difficult to suppress using ordinary vector transformation. The following description is therefore to be considered one of many feasible examples of how the invention can be applied and utilized.

The invention may, for example, be regarded as an important reliability-improving complement to crack detection using eddy current technique, which warns of the presence of disturbing magnetic material, for example of the oxide scale type, on otherwise preferably non-magnetic test objects.

The fact that permeability gives rise to disturbing vectors of varying magnitudes, when $\mu_r > 1$, has long been a well-known problem in eddy current testing of non-magnetic material. Heretofore, various attempts have been made to remove, for example, magnetic oxide scales and the like, for example by flushing the hot billet surface with water under high pressure, which is both expensive and time-consuming and sometimes inefficient.

As far as is known, the existing specialist literature does not describe any method or device corresponding to what is described in the present invention. The basic idea behind the invention is to first detect the presence of magnetic material and then to alert and control the crack detection.

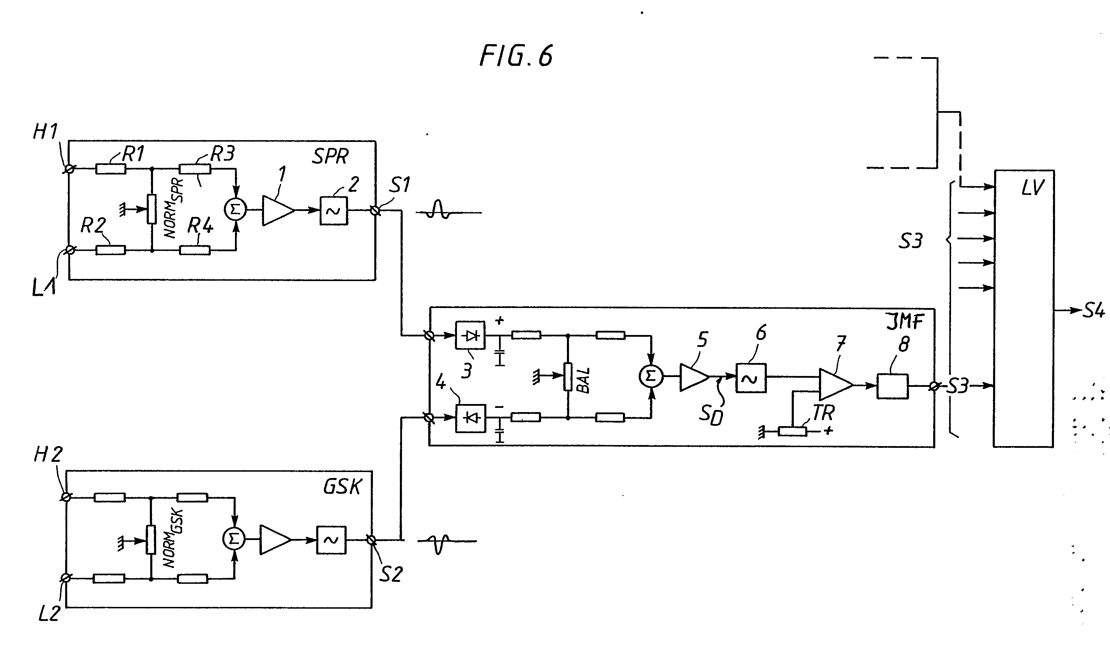

By "transformation block" or "transformation complex" is meant here, for example, those subordinate blocks, for example SPR and GSK in Figure 6, in which in the simple case only one variable per block is suppressed. If suitable, complex hierarchic networks can then be built up with these blocks, so that the resultant signal S4 is not influenced by any of the suppressed signals, which is unique to the invention.

Successively - i.e. block by block - suppressing a variable with one potentiometer per variable and/or block provides for a simplicity of handling which is superior to other known methods of setting.

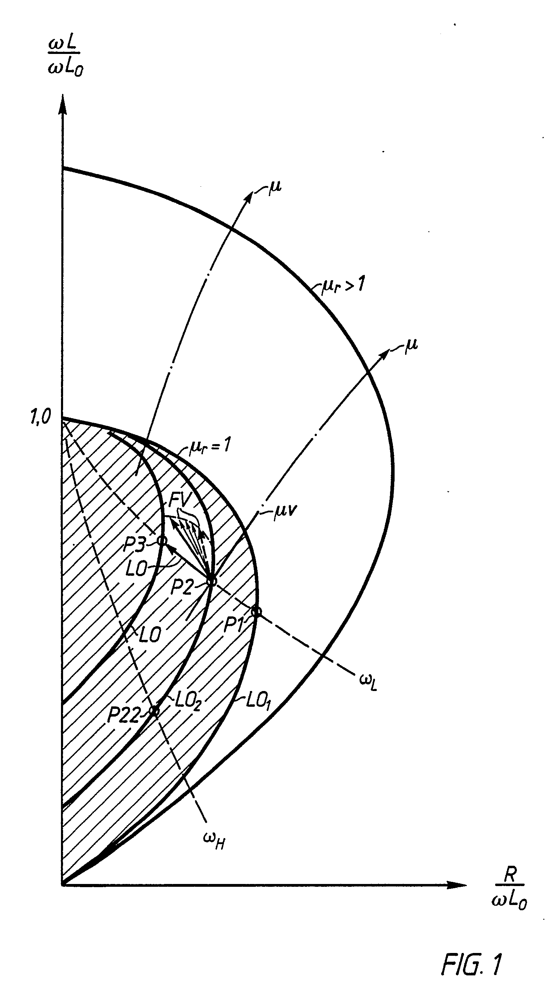

Although much of the impedance diagram according to figure 1 is known to the person skilled in the art, no-one seems to have attempted at or succeeded in drawing the conclusions which form the basis of the invention.

The primary object of the invention is to discover the occurrence of magnetic material and to warn of its presence and effects in order thus to be able to avoid that the magnetic disturbances are misinterpreted as actual cracks. It would, of course, be possible to measure the surface temperature of the billet via, for example, radiation pyrometers, thereby calculating whether the material is magnetic or not. However, for reasons which are easily understood, this method suffers from numerous and considerable drawbacks.

The invention enables, for example, the combination of the detection of cracks and the detection of magnetic material by using, for example, the same eddy current transducer. Also, certain parts of the electronic measuring equipment may also be in common. This involves advantages both from the point of view of economy and from the point of view of measuring technique.

In eddy current testing, for example crack detection, on non-magnetic material, it is assumed that no relative magnetic permeability is present in the material, i.e. that the test object is totally non-magnetic. By non-magnetic material is meant, for example, steel ingots such as slabs, billets and so on, the temperature of which at the time of measuring lies above the so-called Curie temperature or Curie point. It may also be a magnetic steel pipe which, by way of saturation magnetization in conventional manner, has received an apparent permeability substantially corresponding to the absolute permeability $\mu_0$.

In all the above cases it may occur that foreign magnetic particles and the like occur in or on the material, or that, for example, a certain limited spot on a hot billet surface has become magnetic in spots because of a partially low surface temperature.

In continuous casting processes the temperature of the strand may vary as a result of different process parameters, which are changed while casting is in progress. In this case, also the billet surface is often coated with larger or smaller so-called oxide scales, the Curie temperature of which is often somewhat lower than that of the actual steel. Still it happens that the oxide scales, which contain FeO, $Fe_2O_3$ and $Fe_3O_4$, because of insufficient mechanical contact with the surface of the billet, sometimes attain a temperature below their Curie temperature, whereby they become magnetic and greatly disturbing for the eddy current testing.

In this context it is important to determine that irrespective of the reason for the occurrence of magnetic material in or on the test object, its occurrence is invariably disturbing for eddy current testing adapted to non-magnetic test objects, and then particularly in the case of so-called multi-frequency testing.

The invention may be regarded as an important complement to the following Swedish patent applications and patents: 7507857-6, 7613708-2 (DE-A-2825004), 7813344-4 (DE-A-2952129), 8206678-8 (EP-A-83903839.5), 8302738-3 (EP-A-849021068), 8400698-0 (EP-A-85101296.3), 8400861-4 (EP-A-85101525.5), 8601785-2, 8603113-5, and 8603240-6. The terminology and the drawings of these patents and patent applications are applicable, in parts, to the present invention as well. Since the majority of the patents and applications mentioned above include the detection of cracks on hot non-magnetic material, magnetic disturbances can be expected, which justifies a complement according to the present invention.

A few definitions will be given below:

By "eddy current testing" is meant control and/or measurement based on the use of frequencies and/or frequency components within the range of from a few Hz to several MHz, as well as everything else that the skilled person may include in this concept.

By "frequency" is meant in certain cases "carrier frequency", i.e. the frequency of the current with which the transducer/sensor is supplied. The term "frequency" also embraces a composition of different frequencies with one frequency dominating.

By "test object" is meant, for example, a continuously cast billet, a rod, a tube, a sheet or a volume of liquid molten steel. The term "test object" also embraces particles and objects on the surface of the test object, for example oxide scales and the like.

By "transducer" or "sensor" is meant, for example, a surface transducer coil supplied with current, which coil moves, for example, in planes parallel to the surface of the test object, or part of said surface.

By "lift-off" (LO) is meant the distance of the transducer/sensor relative to the surface of the test object (see also the above-mentioned patents and patent applications).

By "magnetic material" is meant that the material is responsive to a permanent magnet, i.e. that the relative permeability $\mu_r > 1$.

By "fault vector" (FV) is meant that vector which is caused, for example, by a crack in the impedance plane of the transducer/sensor, for example as in Figure 1.

By "$\mu$-vector" ($\mu$V) is meant that vector which is caused by the magnetic material as, for example, is clear from Figure 1.

By "vector lobe" (VL) is meant that area in the impedance plane within which fault vectors originating from cracks of varying depths and vertical positions are situated.

It should be pointed out that the following description assumes that the reader has a certain basic knowledge of impedance diagrams, etc., and therefore the more elementary bases and details have been omitted in order to keep the description to acceptable lengths. To restrict the scope of the description, an application of the invention will be described in which the device is based on eddy current technique. However, it should be appreciated that other techniques, for example leakage fluxes, as well as the use of sensors of the Hall element type, and so on, are embraced by the invention and the following description should be read with that in mind.

The invention will now be described in greater detail with reference to the accompanying drawings showing - by way of example - in

Figure 1 a normalized impedance diagram for a conventional transducer,

Figures 2 and 3 vector diagrams for different frequencies,

Figures 4 and 5 block diagrams of the invention,

Figure 6 a detail of Figures 4 and 5, and

Figure 7 a diagram of the different signals.

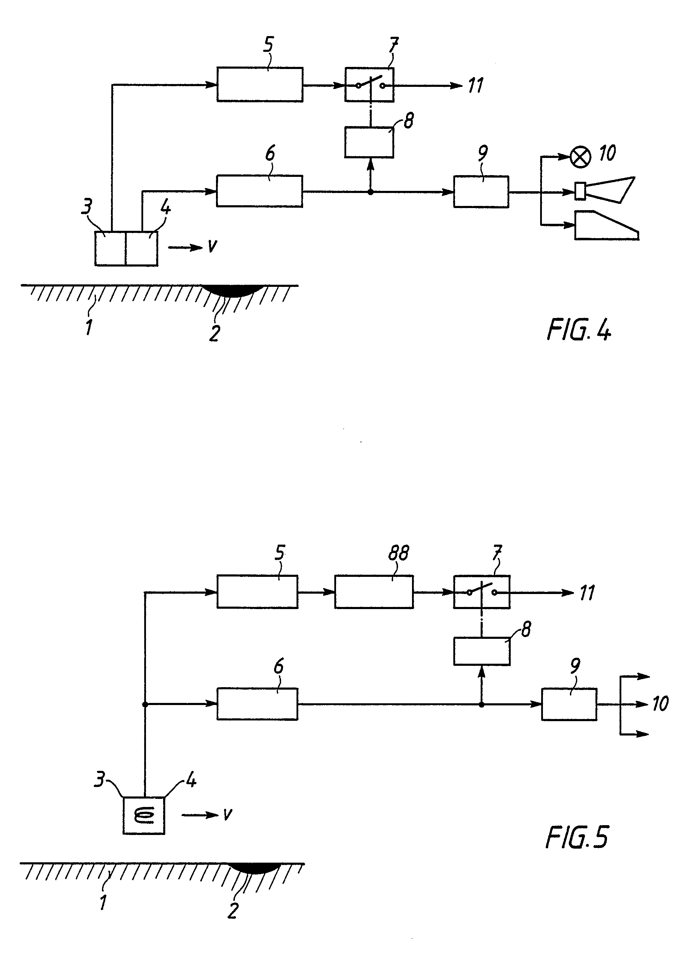

Figure 1 shows a normalized impedance diagram of conventional character for a transducer/sensor. The above-mentioned SE-A-8302738-3 shows in Figure 3 a corresponding impedance diagram in the case of a test object of non-magnetic material, i.e. the impedance curves are based on $\omega_L/\omega L_o = 1.0$. In the accompanying Figure 1, the impedance plane has been supplemented with curves for a magnetic material, i.e. for $\mu_r > 1$. As will be clear, the permeability $\mu_r > 1$ increases the electric impedance, which may greatly disturb the eddy current measurement of cracks and like defects, especially when the cracks have a direction in the impedance plane which largely coincides with the $\mu$-direction.

The magnetic permeability has a direction in the impedance plane as is clear from the $\mu$-vectors and the dot-dashed lines displayed in Figure 1.

In, for example, crack detection on hot (> 780°C) steel ingots, the temperature of which exceeds the Curie temperature, the steel is non-magnetic. If a simple surface transducer is used for crack detection and the distance of the transducer to the billet surface varies, for example, between $LO_2$ and $LO_3$, the impedance of the transducer also varies. This impedance variation has different magnitudes at different carrier frequencies, and for a certain frequency, $w_L$ in Figure 1, it is shown as a vector LO between points P2 and P3. Depending on the direction of the LO-movement, this vector may reverse its direction, that is, it may change polarity.

The $LO_1$-curve in Figure 1 applies for a strong inductive coupling between the transducer and the test object, for example a coupling which would occur with $LO = 0$, which means that the transducer is in physical contact with the surface of the test object. It is also possible, for example, to define the $LO_1$-curve as the smallest LO-distance which is possible in practice. For the non-magnetic material, this then means that the impedance curves are contained within the hatched area of Figure 1.

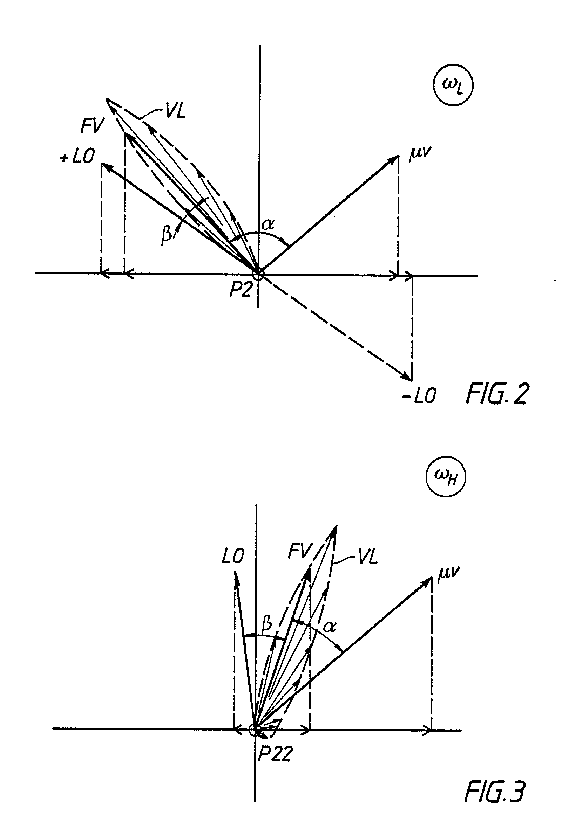

Now, let it be assumed that the transducer is at the distance $LO_2$ from the surface of the test object and that we are studying the carrier frequency $\omega_L$, which means that we are at point P2 in Figure 1. When the transducer is positioned over a crack, a so-called fault vector (FV) is obtained, the direction of which lies near the LO-direction, which is described in detail in the above-mentioned SE-A-8302738-3. Now, if the test object for some reason should become magnetic, i.e. $u_r > 1$, a vector would be obtained in a corresponding manner, which in Figure 1 is shown as a vector $\mu V$. It should be pointed out here that the vectors FV and $\mu V$ after detection have different signal frequency contents, i.e. different duration, which is due to the fact that the crack has an appearance which is different from (shorter than, for example) the magnetic region on the test object, which may be an increased thickness of oxide scale. These vectors, which are often of a differential nature, have, for two different carrier frequencies, $\omega_L$ and $\omega_H$, been separated from Figure 1 and are plotted graphically in Figures 2 and 3. These vectors can be conventionally transformed into, for example, voltages which may be rectified via, for example, phase-controlled rectifiers. In this way, it is possible to separate vectors having different directions, i.e. different phase positions, in the impedance diagram.

When using the term vector, this is often understood to include also a signal, for example an alternating voltage, the phase position of which represents the direction of the vector in the vector plane and the amplitude of which corresponds to the magnitude of the vector. In Figures 2 and 3 the so-called vector lobes (VL) have been indicated in dashed lines. These lobes indicate the limited area within which fault vectors of a varying depth and vertical position are located. In the case of unusually large cracks, the length of the lobe may be greater.

It is easily realized that in addition to their magnetic vector, the oxide scales also contain an LO-vector part because of their thickness. Therefore, the oxide scales appear somewhat indefinitely in the impedance diagram. However, tests carried out in practice show that the combined vector direction of the oxide scales differs from surface cracks at higher frequencies, whereas at lower frequencies there are cracks which are somewhat more difficult to distinguish by phase-discrimination from oxide scales of a certain character.

From Figure 3 it is clear that the lower right hand part of the vector lobe VL intersects the $\mu$-vector, $\mu V$. This part of the vector lobe usually represents cracks located somewhat deeper in the material, i.e. cracks not open to the surface. The consequence of this is that at higher frequencies there are cracks whose direction in the impedance diagram coincides with the $\mu$-direction. In other

words, FV and $\mu$V cannot be separated in a reliable manner using phase discrimination at higher frequencies. On the other hand, at a suitably selected low frequency, as shown in Figure 2, separating VL from $\mu$V, and vice versa, does not present any problem, as in this case no intersection occurs. As far as is known, this fact has not been made use of by anyone in order to increase the reliability in crack detection, as taught by the present invention.

As a first step towards a reliable separation of the $\mu$-vector from the other vectors, a suitable, often low, frequency is chosen which enables separation of $\mu$V from FV. As a second step, for example, the lift-off (LO) vector is suppressed. It is to be noted here that LO may change polarity, which in Figure 2 is marked by + LO and -LO, respectively. Therefore, if, as indicated in Figure 2, detection is carried out in the horizontal direction, the respective vector projection on the horizontal line will be approximately the same for $\mu$V and -LO, which means that it is impossible in this way to separate $\mu$V from -LO. On the other hand, as can be seen, at $\omega_L$ and horizontal projection of FV and $\mu$V, these can be separated from each other in an excellent way since the projections of FV and $\mu$V have different signs, which are easily distinguished between by electronic means. At a sufficiently low frequency where the angle $\alpha$ or the sum of the angles $\alpha$ and $\beta$ is in the vicinity of 90°, it is possible relatively efficiently to suppress the LO-influence by detecting the vectors largely perpendicular to the LO-direction or the FV-direction, depending on which of these is the most disturbing for the $\mu$-vector separation.

In the case of normal surface cracks, the angle $\beta$ is often < 18°, which means that the fault vector is also suppressed relatively well when detecting perpendicular to the LO-direction. Because of the somewhat incomplete suppression of FV, however, it may be useful to improve the suppression via a filtering method. To this end, the fact is employed that the frequency contents in the detected and rectified fault vector FV is higher than the frequency contents in the corresponding $\mu$-vector signal and the LO-vector signal. The filters for the respective vector types are therefore tuned to different signal frequencies, whereby the vectors can be more easily separated from each other. The reason for the different frequency contents is that cracks and the possible magnetic portions of the test object have different shape and propagation. The transducer is then located over the crack and over the magnetic portions for different periods of time.

Since the LO-signal also differs with respect to frequency from other signals or vectors, the LO-signal can also be separated or further suppressed via a filter method, if required. Another method of separating or suppressing both LO-signals and GSK-signals is via the type of transformation to which the present invention relates. In this case at least one LO-signal, or part thereof, of a different carrier frequency origin is employed in order to compensate, for example to balance away, the LO-vector. The same technique can also be employed for separation and suppression of FV-signals and so on. The invention includes both separate and combined solutions of the principles mentioned here.

In order for the vector transformation to operate satisfactorily, the relatively definite direction in the impedance diagram of the oxide scale vectors is a fundamental condition, and also that both the absolute direction and the direction relative to other vector types are different at different frequencies. The frequencies/carrier frequencies used may advantageously be, for example, 10 KHz (L) and 1 MHz (H), respectively. The frequency ratio H/L > 5 has in certain cases obvious advantages.

To prevent $\mu$-vectors from being confused with fault vectors, it is advantageous to use the detected presence of magnetic material for automatically blocking the crack detector so that no false cracks are indicated. At the same time, some form of alarm should be given, for example automatically, in order to draw attention to the fact that the crack detector has been temporarily blocked or is unreliable because of magnetic disturbances.

The presence of magnetic material can also be used as an indication that something is wrong in the process, for example that excessive cooling is occurring in the continuous casting machine. When alarm is given indicating the presence of magnetic material, it is also possible - for example, automatically and temporarily - to activate devices for the removal of oxide scale and the like magnetic material.

In certain cases, it may be desirable that alarm is given when the permeability level exceeds a certain set threshold value. For that reason, the permeability signal should be largely constant within the LO operating range of the transducer. This can be achieved by signal processing, for example amplifying, the $\mu$-signal as a function of the LO-signal.

In those cases where the same transducer is used for both the detection of cracks and for the presence of magnetic material, the following advantages, inter alia, may be obtained: The measurement takes place at the same time on the same surface part, so the measured values are the current ones and are related to each other. The permeability dependence of the crack detection is nearly exactly indicated because the same transducer is used for both measurements. The transducer arrangement is, of course, simpler and less expensive.

The above-mentioned SE-A-8400698-0 relating to so-called dynamic transformation may, in certain cases, constitute a complement to the invention, or vice versa, since the oxide scales because of their thickness often give rise to a disturbing lift-off vector. Particularly in the case of thick and large oxide scales, where the lift-off variations are considerable, it may be justified to make use of the dynamic transformation.

In crack detection, some form of transducer manipulator is often used to move the transducer or sensor over the test object, for example, a hot steel strand. The transducer may also consist of a so-called "whirligig" device, i.e. it has a rotary path superimposed on a slower scanning movement. The invention comprises those cases where the transducers for detecting cracks and magnetically disturbing material are placed on or in the same scanning arrangement. This has several advantages. In this way, crack detectors can be blocked to an optimum extent, i.e. to a sufficient extent and for an adequate period of time, since the information about the presence of magnetic material is both up-to-date and exact.

To illustrate how the crack detector and the magnetic detector or $\mu$-detector can cooperate, two largely equivalent block diagrams are shown in Figures 4 and 5. Let it be assumed that the test object 1 contains a magnetic oxide scale flake 2. The transducers 3 and 4, which in Figure 5 consist of a common surface transducer coil, move over the surface of the test object 1. The transducers, which move at the velocity v m/s, consist of one crack transducer 3 and one transducer 4 for $\mu$-detection. The transducers are respectively connected to a crack detector 5 and a $\mu$-detector 6. The crack detector 5 is connected to a blocking circuit 7, from which crack signals can be obtained at an output 11. In Figure 5 the crack signal also passes through a delay circuit 88. The output signal from the $\mu$-detector 6 controls the blocking circuit 7 via a time delay unit 8, which may, for example, extend the control signal from the $\mu$-detector 6 so as to obtain an optimum blocking. Different types of alarm signals 10 are given via an alarm unit 9. A particularly good arrangement is to locate the $\mu$-transducer 4 immediately in front of the crack transducer 3 since in this way the crack detector 5 is blocked just before the crack transducer 3 reaches the disturbing region 2. The same end is achieved if, as shown in Figure 5, the crack signal is delayed in the delay circuit 88, which may consist of an analog shift register or the like. This delay makes it possible for a false crack signal, which has arisen as a result of the flake 2 of magnetic material, to be blocked in a reliable manner by the signal from the $\mu$-detector 6. Because of the delay in the circuit 88, the signal from the $\mu$-detector should be extended by the time delay unit 8, for example by a period somewhat longer than the delay time set by the delay circuit 88.

The invention is also characterized in that alarm signals 10, for indicating the presence of magnetic material, can be used to activate and/or control, for example, a separate device for the removal and/or elimination of the magnetic material and/or a suppression of its effects on, for example the detection of cracks.

The invention thus embraces the use of a further device, for example controlled via an alarm signal 10, for eliminating completely or partially the magnetic properties of oxide scales and the like on, for example, hot test objects, by heating the oxide scales to a temperature corresponding to at least the Curie temperature of the oxide material, which renders the oxide scale largely non-magnetic. This heating can, for example be achieved by heating up the oxide scales (e.g. using at least one gas burner or gas flame). Another way is to raise the temperature of the oxide scales by means of an inductive heating device. The heating device may advantageously be mounted on the scanning equipment adjacent to the transducer of the measuring and/or control device. Such heating can be initiated, for example, when the $\mu$-detector 4 indicates that the oxide scales are magnetic or are tending to become magnetic. In this way, the heating can take place selectively in places where magnetic oxide scales and the like have become established. By locating the transducers for crack detection and $\mu$-detection and the heating device on the same movable support connected to, for example, a billet strand, for example on a cross travel carriage, a financially attractive overall solution is obtained.

In summary, the invention comprises providing, for example, a conventional eddy-current based crack-detecting equipment, which is adapted to scan preferably non-magnetic test objects, with a device which detects - for example, advantageously via eddy current technique - the presence of disturbing magnetic material, for example relatively cold magnetic oxide scales, in and/or on the test object in order thus to monitor, for example, that disturbances (i.e. so-called "false" cracks) originating from the presence of magnetic material, are not confused with real cracks and similar harmful surface defects.

In order to avoid too large a proportion of the sensed surface becoming insensitive for crack detection because of excessive magnetic disturbances, the device can be provided with means (for example a heating device) to eliminate the magnetic properties of, for example, oxide scales.

It should be emphasized that the invention is to be regarded as a further development of Claim 12 of the SE-A-8603604-3, which means that the inventions are to be seen as a whole, in which the present invention supplements the original one insofar as the signal processing is concerned. This means that the invention can be realized as a separate device or be included as an integral part in another device, the task of which need not be to separate oxide scales and cracks from each other.

A detailed example of vector transformation, according to the present invention, in diagrammatic form is shown in Figure 6. Figure 6 can be regarded as a functional diagram of block 6 in Figures 4 and 5 and connects on the Claim 12 of SE-A-8603604-3. Measurements in practice have shown that the cold oxide scales occur relatively stably in phase in the impedance diagram of the transducer; in other word, the oxide scale vectors have a relatively definite direction at the frequencies used. However, this direction varies between the frequencies themselves. In Figure 6, the input signals H1,L1 and H2,L2, respectively, consist of signals from, for example, phase-controlled rectifiers, so-called synchronous carrier frequency detectors. H1 and H2 originate from, for example, a high carrier frequency, for example, a high carrier frequency, for example, 1 MHz, whereas L1 and L2 originate from, for example, a low carrier frequency, for example 20 KHz. H1,H2,L1 and L2 may be output signals from different detectors. However, there are also alternative settings in which H1 = H2 and L1 = L2, which despite their simplicity function very well in practice. This, of course, means that the setting will be simple and pure, which may be very important in practical operation in which incorrect settings, caused by too complex settings, are not unusual. For the sake of simplicity, it is assumed in the following that H1 = H2 and L1 = L2, which, however, is to be seen as one of many possible alternatives.

In the following description, certain abbreviations and terms are used as follows: SPR: Crack or crack channel (OSCM suppressed)
GSK: Oxide scale or oxide scale channel (GSK suppressed)
OSCM: Oscillation mark
OSCM/SPR: Oscillation mark with crack
BAL: Balancing
LO: Lift-off
JMF: Comparison or comparison channel
QUANTITY: This it to be construed in a broad manner, for example, to embrace a crack, an oxide scale, a surface defect, a dimension, a shape, a voltage, etc.
CHANGE: By "change" is meant, in principle, a change in or on the test object and it may include, for example, a crack, an oxide scale, etc. Also dimensional changes and the like are embraced by the concept "change", for example, a deviation from a normal value
VARIABLE: By "variable" is meant, in principle, the same as is embraced by the concept "quantity", with the clarification that the quantity is variable.

It should be noted that the concept "change" also embraces the concept "quantity" in those cases where this is measurable.

The balancing of S1 and S2 relative to each other and the subsequent level comparison towards a threshold value are to be regarded as a comparison in one of the simpler cases.

Figure 6 is divided into three functional blocks/channels, namely, SPR, GSK and JMF. The task of the SPR block is to suppress LO and OSCM. The task of the GSK block is to suppress GSK. The task of the JMF block is to compare the signals S1 and S2 from the SPR and GSK blocks, respectively, with one another. The output signal S3 from the JMF block is employed, for example, for blocking the crack detector unit in the presence of so-called false crack signals caused by oxide scales. The term "to block" is to be construed in a broad manner and includes, for example, the meanings of "bar", "damp", "separate", "short-circuit", etc. It would, however, be possible to combine several signals of the same type as S3 into superordinate condition complexes, whereby it is, of course, possible to carry out, for example, advanced signal separations etc. by using several S3-signals as digital input signals to digital condition networks. In other words, Figure 6 can be regarded as a building block, from which, by multiplying and combining, complex structures/networks can be built. By detecting the carrier frequency signals, as indicated in Figure 6, so that the H-and L-signals assume different polarity, these can be weighted relative to each other by means of the NORM-potentiometer $NORM_{SPR}$ and $NORM_{GSK}$, respectively. By grounding the centre slide of the potentiometers, as shown in Figure 6, the respective transformation block can be normalized with a potentiometer, which significantly simplifies the handling. The same is true of the balancing potentiometer. For the SPR-channel/block a position of $NORM_{SPR}$ must be chosen which gives a minimum output signal S1 for LO and OSCM. For the GSK channel/block, in a similar manner, a position of $NORM_{GSK}$ must be chosen which gives a minimum output signal S2 for GSK. The SPR and GSK channels are to be regarded as separate, simple transformation blocks, usually utilizing different NORM-settings to suppress one or a few variables/quantities. By thereafter combining several blocks, the number of suppressed variables can, of course, be increased in spite of the fact that the method for setting does not become more difficult. The setting of an optimum NORM for the respective variable, of course, normally takes place with its separate NORM potentiometer.

It is also worth noting that the respective blocks may otherwise advantageously be built up identically. The blocks may also suitably be designated subtransformation complexes or the like. In practice, sometimes, signals from one block are utilized in another block; i.e. a type of loan which falls within the scope of the invention. The important thing, however, is that the signals S1 and S2 originate from completely or partially different normalizations.

By the simple circuit solution, in which the resistance networks R1,R2,R3,R4 and the NORM potentiometer constitute the weighting portion together with the amplifier 1 and the filter 2, the signals which are to be minimized can thus be suppressed individually by their separate NORM-setting. This, of course, facilitates the handling.

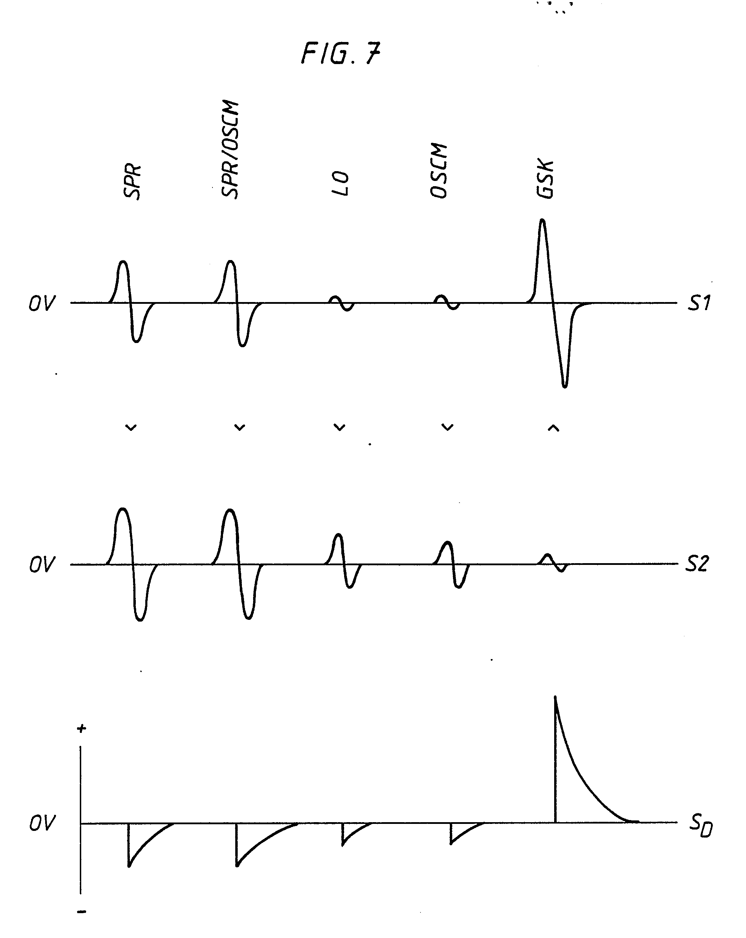

By using the same input signals to the transformation blocks (H1 = H2 and L1 = L2) and normalizing the blocks for suppression of OSCM and of cold GSK, it is often sufficient with two input signals only. This, in combination with the above, forms the basis of a very simple setting. Figure 7 shows how the signals S1,S2 and $S_D$, because of different NORM-and BAL-settings, vary in amplitude depending on their origin. The S1-signal exhibits a low amplitude for LO and OSCM whereas the S2-signal in a corresponding manner exhibits a low amplitude for GSK. The arrows between the S1-and S2-signals point at the greatest signal for the respective origin. As will be clear, the direction of the arrow for GSK differs from the other, which is important to note.

The task of the JMF-block in Figure 6 is to compare the signals S1 and S2 with each other. By rectifying S1 and S2 via the rectifiers 3 and 4, two signals of different polarity are obtained independently of whether S1 and S2 have an inverted appearance, as is shown in Figure 6, or otherwise differ in shape. In other words, the full-wave rectifiers have a equalizing effect on the curve shapes of S1 and S2. If the rectifiers 3 and 4 are provided with capacitors on their outputs, the equalizing effect will be further improved. In Figure 7 the $S_D$-signal has a discharge curve shape, which is due to the above-mentioned capacitors. The signals S1 and S2 can be weighted relative to each other by way of the balancing potentiometer BAL, which can be seen as a superordinate normalization. By selecting a suitable BAL-setting, an appearance of the $S_D$-signal is obtained as shown in Figure 7. As will be clear, GSK has a positive polarity whereas the other input parameters/quantities give rise to a negative polarity.

The consequence of the above is that, after character generation, weighting and summing of signals S1 and S2 via, inter alia, amplifier 5, filter 6, and a suitable threshold voltage on amplifier 7, it is possible to separate the oxide scale signals from the other signals. In the block 8 the signal from the amplifier 7, for example, is digitized in order to impart a suitable shape and level to the S3-signal. Thereafter, the S3-signal may, for example, be used for controlling/blocking the crack detection unit, by blocking the signal path or by, for example, resetting an error code register, and the like. The superordinate S4-signal can be used in a corresponding manner.

In those cases where it is desired to suppress several variables/quantities, it may be justified to extend the number of transformation complexes. Several S3-signals, S3', are then obtained, as is indicated in Figure 6. These S3'-signals constitute input signals to the weighting block LV, which, for example comprises logic circuits forming special conditions, i.e. a type of superordinate condition function. The output signal from LV is designated S4 and can be looked upon as a more sophisticated control signal or S3-signal. The condition block LV may be built up of everything from simple threshold circuits to advanced and complex logic circuits, comprising, for example, AND-and OR-gates, comparators, etc. In this way, the transformation function thus used and supplemented becomes special in nature and may, for example, be used in spite of the fact that the quantity (in this case oxide scales) varies in shape and dimension and is thus difficult to suppress in a conventional manner.

In conventional suppression of unwanted quantities/variables by means of vector transformation, as described in the above-mentioned patents/applications, and by Libby, the starting-point are continuous linear functions which are then normally represented by analog voltages, which via weighting methods and combination results in suppression of the unwanted quantity/variable, for example LO. Contrary to this, in the present invention (see Figure 6) a method involving comparison and conditions is utilized to determine the type of quantity/variable, for example whether the sensed surface crack on the billet surface is a genuine or a false crack.

The condition-based separation described above can also be used for detecting and/or suppressing other quantities/variables than oxide scales and magnetic material, which is also embraced by the invention.

Since the transformation includes some kind of conditions, the requirement for the accuracy of setting is often reduced, since in many cases it is sufficient with a determination of polarity of the $S_D$-signal to determine the type of signal occurring, for example whether or not it is a question of an oxide scale (see Figure 7). This can also be expressed as follows: Instead of aiming at a complete suppression of the unwanted analog signal, as in the case of conventional transformation, according to the present invention a comparison is carried out, for example of the amplitude, between two separate signals/blocks having different transformation settings.

The invention can be varied in many ways within the scope of the following claims.

## Claims

1. Device for control and/or measurement, for example detection supervision, testing, monitoring, etc., of a test object (1), for example a hot non-magnetic steel ingot, with respect to a quantity, for example, a change, and/or a combination of quantities in and/or on the test object, which device comprises at least on transducer/sensor, for example an eddy-current based surface transducer, which is adapted to move relative to the test object, and which transducer, directly or indirectly, delivers at least two signals (H1,L1) which signals are signal-processed for example, rectified, weighted, combined and/or summed, by means of a so-called transformation method, **characterized** in that at least one quantity, for example a cold oxide scale, and/or combination of quantities, can be separated, for example blocked or suppressed, from or relative to at least one other quantity, for example a surface crack, and/or a combination of quantities, for example a crack in an oscillation mark, as a function of a comparison of signals (S1,S2), originating from at least two transformation blocks and/or normalization settings.

2. Device according to Claim 1, **characterized** in that the comparison is supplemented, or carried out in combination, with conditions, for example condition functional blocks built up AND-gates, OR-gates, comparators, and the like.

3. Device according to Claim 1 or 2, **characterized** in that transformation blocks are largely similarly built up but differently set/normalized, for example set for suppression of oscillation marks or cold oxide scales.

4. Device according to any of the preceding Claims, **characterized** in that only two signals (H1, L1) are used per transformation block.

5. Device according to any of the preceding Claims, **characterized** in that at least two identical and/or similar input signals (H1, L1) are used in at least two transformation complexes.

6. Device according to any of the preceding Claims, **characterized** in that at least one output signal (S1) from transformation complexes is signal-processed, for example rectified, so that disturbing irregularities can be suppressed.

7. Device according to any of the preceding Claims, **characterized** in that the device is used integral with, and/or in combination with, a measuring and/or control equipment, for example an eddy-current based crack detection equipment.

8. Device according to any of the preceding Claims, **characterized** in that at least one signal representing a certain quantity, for example a cold oxide scale, or a combination of quantities, is used to control, for example to automatically separate or suppress, at least one signal path, for example to temporarily/instantaneously block the crack detector unit/device so that so-called false crack signals, for example originating from cold oxide scales, are not indicated.

9. Device according to any of the preceding Claims, **characterized** in that normalization and/or balancing (BAL) of at least one transformation complex and/or comparison complex (JMF) are carried out with only one potentiome ter, the movable centre tapping of which is directly or indirectly connected to zero potential and/or to the frame.

10. Device according to any of the preceding Claims, **characterized** in that at least one special potentiometer (BAL) is used for balancing transformation complex output signals (S1, S2) relative to each other.

FIG. 1

0 276 827

FIG. 2

FIG. 3

FIG. 4

FIG. 5

FIG.6

# FIG. 7